(19) Europäisches Patentamt
European Patent Office
Office européen des brevets

(11) Numéro de publication: **0 201 361**
**B1**

# (12) FASCICULE DE BREVET EUROPÉEN

(45) Date de publication du fascicule du brevet: **02.08.89**

(51) Int. Cl.⁴: **B 01 D 13/04**, B 01 D 53/22, C 08 G 73/06

(21) Numéro de dépôt: **86400280.3**

(22) Date de dépôt: **10.02.86**

## (54) Membranes asymétriques ou composites à base de polyquinoxalines et leur application en perméation gazeuse.

(30) Priorité: **11.02.85 FR 8501879**

(43) Date de publication de la demande: **12.11.86 Bulletin 86/46**

(45) Mention de la délivrance du brevet: **02.08.89 Bulletin 89/31**

(84) Etats contractants désignés: **DE FR GB NL**

(56) Documents cité:
**FR-A-2 392 697**
**FR-A-2 405 742**
**US-A-4 130 403**
**US-A-4 134 742**
**US-A-4 230 463**

(73) Titulaire: **INSTITUT NATIONAL DE RECHERCHE CHIMIQUE APPLIQUEE, 18 Bis, Boulevard de la Bastille, F-75012 Paris (FR)**
Titulaire: **COMMISSARIAT A L'ENERGIE ATOMIQUE, 31/33, rue de la Fédération, F-75015 Paris (FR)**
Titulaire: **TOTAL Compagnie Française des Pétroles, 5 rue Michel- Ange, F-75016 Paris (FR)**

(72) Inventeur: **Dick, Richard, 2 rue Nicolas Houel, F-75005 Paris (FR)**
Inventeur: **Le Jeune, André, 1 rue du 14 Juillet, F-28000 Mainvilliers (FR)**
Inventeur: **Fournie, François, 37 rue La Quintinie, F-75015 Paris (FR)**

(74) Mandataire: **Rinuy, Santarelli, 14, avenue de la Grande Armée, F-75017 Paris (FR)**

**EP 0 201 361 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne des membranes asymétriques ou composites à base de polyquinoxalines, leur application possible en perméation gazeuse et plus particulièrement pour le fractionnement des mélanges gazeux, et notamment la déshydratation et la désacidification des gaz, spécialement les hydrocarbures gazeux.

Les polyquinoxalines sont préparées par polycondensation des tétracétones ou des dialdéhydes bicétoniques avec des tétramines selon le schéma:

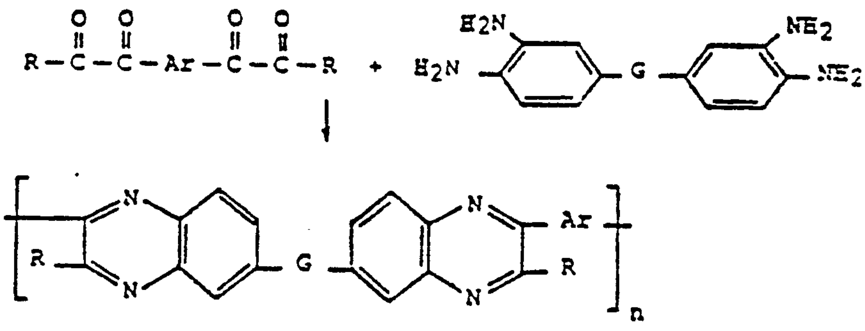

avec n $\geqslant$ 10 et

R = H ou radical phényle

G = liaison carbone-carbone ou -O-, -S-, $-SO_2-$, -CO-

Ar =

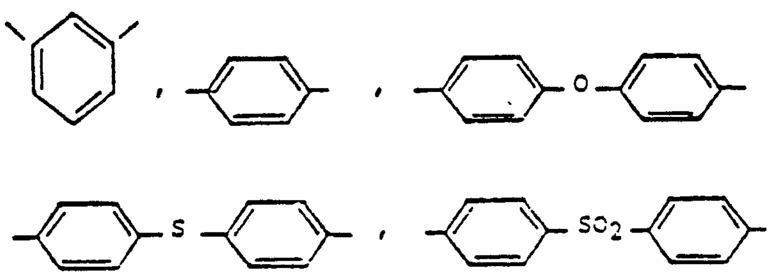

Cette polycondensation est en général effectuée en solution (voir par exemple G. de Gaudemaris, B. Sillion, J. Preve, Bull. Soc. Chim. (1964), 1793 - J.K. Stille, J.R. Williamson, J. Polym. Sci. /A/ 2, 3867 (1964) et P.M. Hergenrother, Polymer Eng. Sci. 16 (N° 5), 303 (1976)).

Les polymères de la famille des polyquinoxalines se caractérisent par une bonne stabilité chimique et thermique qui les rend particulièrement aptes à résister à des conditions d'utilisation drastiques (oxydation, pH extrêmes, etc...). Leur solubilité dans certains hydrocarbures chlorés et dans le m-crésol permet de les mettre sous forme de films et de membranes.

On connait en particulier des membranes telles que décrites dans le brevet français 2 392 697 à base de tels polymères, mais il s'agit de membranes microporeuses destinées à l'ultrafiltration, procédé qui implique une séparation par un processus de simple écoulement qui n'a rien à voir avec les processus mis en oeuvre lors de la séparation par perméation gazeuse. En effet, le passage d'un gaz à travers une membrane de perméation gazeuse a lieu selon un mécanisme de dissolution et de diffusion obéissant aux lois de Fick.

Ce processus implique une dissolution du gaz dans la partie active du matériau membranaire, par exemple au niveau de la face amont de la membrane, puis une diffusion des molécules dissoutes de la face amont vers la face aval sous l'effet de la différence de pression entre les deux faces et enfin une évaporation des molécules de gaz sur la face aval de la membrane.

De ce fait, le coefficient de perméabilité P d'un gaz à travers la membrane est défini comme étant le produit de deux coefficients: P = S.D

S = coefficient de solubilité du gaz dans la membrane

D = coefficient de diffusion du gaz dans la membrane.

Pour que la membrane puisse séparer deux gaz, il est nécessaire que les coefficients de perméabilité des deux gaz diffèrent entre eux.

Le transport de gaz selon ce mécanisme est différent de celui par écoulement dans les milieux microporeux. Le passage d'un gaz à travers une membrane microporeuse a lieu selon la loi de Knudsen si le libre parcours moyen du gaz est supérieur au diamètre des pores. Dans ce cas, les coefficients de perméabilité $P_1$ et $P_2$ de deux gaz de masse moléculaire $M_1$ et $M_2$ sont dans le rapport:

$$\frac{P_1}{P_2} = \left(\frac{M_2}{M_1}\right)^{0,5}$$

Pour qu'il y ait séparation des deux gaz, il est nécessaire que leurs masses moléculaires soient nettement différentes.

Ainsi, lorsqu'il s'agit de séparer efficacement des gaz de masses moléculaires voisines par exemple: $CO_2$, $H_2O$ et $CH_4$, il est nécessaire que le passage de ces gaz ne se fasse pas à travers une membrane uniquement microporeuse, sinon le facteur de séparation entre ces gaz, pris deux à deux, sera dans le rapport de la racine carrée de leurs masses moléculaires, c'est-à-dire:

$$\frac{H_2O}{CH_4} \sim \left(\frac{16}{18}\right)^{1/2} = 0{,}94$$

$$\frac{CO_2}{CH_4} \sim \left(\frac{16}{44}\right)^{1/2} = 0{,}60$$

ce qui constitue une séparation trop faible pour présenter un intérêt pratique.

Pour que le phénomène de perméation gazeuse puisse s'exercer pleinement, il importe que la membrane possède sur une de ses faces une couche dense. Par couche "dense", on entend une couche ne présentant pas de pores permettant le passage direct des molécules gazeuses par simple écoulement sous l'effet de la pression.

Ces pores devront être de diamètre nettement inférieur à 10 nm, de préférence inférieurs à 5 nm.

Etant donné que la vitesse de diffusion des molécules de gaz à travers une telle zone est faible, il est souhaitable que l'épaisseur de cette zone soit la plus faible possible et ne représente qu'une fraction de l'épaisseur totale de la membrane; l'autre partie de la membrane comporte de préférence une zone de structure microporeuse, afin de ne pas ralentir le passage du gaz.

Par ailleurs, comme la plupart des polymères filmogènes, les polyquinoxalines de masse moléculaire suffisamment élevée permettent de préparer des membranes ou films de bonne tenue mécanique. De tels films ou membranes denses et de structure homogène peuvent être préparés en coulant à l'aide d'un applicateur, une solution de polyquinoxaline de viscosité suffisante sur un support plan et en évaporant complètement le solvant. Pour éliminer complètement le solvant, il peut être utile d'effectuer cette évaporation sous vide et à des températures supérieures à 100°C. Dans ces conditions, on obtient des films ou membranes dont le diamètre moyen des pores est inférieur à 1 nm.

Pour déterminer les perméabilités de ce type de polymère vis-à-vis de différents gaz, les demandeurs ont préparé des films de polyphénylquinoxaline d'une épaisseur de 10 à 20 microns par évaporation complète du solvant.

Les mesures de perméabilité gazeuse ont montré que d'une façon surprenante, ces films étaient nettement plus perméables à la vapeur d'eau qu'aux autres gaz. Dans le tableau 1 ci-après sont consignés les valeurs des perméabilités obtenues pour différents gaz à 20°C et sous une pression de 3 bars (à l'exception de la vapeur d'eau dont la perméabilité a été mesurée à 50°C et à une pression relative de 0,56 à 0,60), ainsi que les facteurs de séparation correspondant aux rapports des perméabilités des gaz. Les perméabilités sont exprimées en unités $m^4/m^2$ sec MPa représentant le volume mesuré en $m^3$ ayant traversé une membrane de 1 $m^2$ de surface utile et de 1 m d'épaisseur en une seconde sous une différence de pression de 1 MPa.

Les valeurs obtenues peuvent être considérées comme étant proches des perméabilités intrinsèques des polyphénylquinoxalines car les films ont été préparés dans des conditions expérimentales qui évitent la formation de pores. De ce fait, on peut estimer que le passage des gaz à travers le film a lieu selon un mécanisme de dissolution et de diffusion qui obéit à la loi de Fick. Seule la présence éventuelle de défauts dans le film pourrait être à l'origine d'un passage du gaz par écoulement à travers les pores.

La comparaison des perméabilités intrinsèques de ces films à celles de films préparés à partir d'autres polymères (tableau 2 ci-après) montre que seul l'acétate de cellulose possède un facteur de séparation entre la vapeur d'eau et le méthane supérieur à celui de la polyphénylquinoxaline, pour une perméabilité au $CH_4$ équivalente, mais par contre un facteur de séparation entre le gaz carbonique et le méthane plus faible. La polyphénylquinoxaline possède en outre une stabilité chimique et thermique nettement supérieure à celle de l'acétate de cellulose. Pour ces raisons, les polymères de la famille des polyquinoxalines présentent un intérêt particulier pour la séparation de la vapeur d'eau et du gaz carbonique des hydrocarbures gazeux.

**Tableau 1**

Perméabilités intrinsèques P et facteurs de séparation de films homogènes en polyphénylquinoxaline vis-à-vis de différents gaz.

P exprimée en $\frac{m^3 \cdot m}{m^2 \cdot sec \cdot MPa}$

Température de mesure: 20°C

| | | | | | | | | | |
|---|---|---|---|---|---|---|---|---|---|
| $P \cdot 10^{12}$ | | | | | | Facteurs de séparation | | | |
| $O_2$ | $CO_2$ | $N_2$ | $CH_4$ | He | $H_2O$* | $H_2O/CH_4$ | $CO_2/O_2$ | $CO_2/CH_4$ | $H_2O/O_2$ |
| 7,5 | 45,0 | 2,25 | 2,25 | 55,5 | 13500 | 6000 | 6 | 20 | 1800 |

* mesurée à 50° C et pour une pression relative $\frac{P}{Po} = 0{,}56$

**Tableau 2**

Perméabilités intrinsèques et facteurs de séparation de films denses vis-à-vis de la vapeur d'eau, du gaz carbonique et du méthane.

P exprimé en $\frac{m^4}{m^2 \cdot sec \cdot MPa}$

| Nature du film | $P \cdot 10^{12}$ $CH_4$ | $CO_2$ | $H_2O$ | Facteur de séparation $H_2O/CH_4$ | $CO_2/CH_4$ |
|---|---|---|---|---|---|
| Polydiméthylsiloxane* | 44 25 | 24000 | 300000 | 68 | 5,4 |
| Ethyl cellulose* | 45 | 300 | 180000 | 4000 | 6,7 |
| Polycarbonate* | 27 | 60 | 10500 | 389 | 2,2 |
| Polychlorure de vinyle* | 15 | 27,7 | 4425 | 295 | 1,8 |
| Polysulfone | 12,7 | 33 | 9000 | 705 | 2,6 |
| TEFLON FEP* | 10,5 | 12,7 | 247,5 | 24 | 1,2 |
| Acétate de cellulose* | 2,25 | 18 | 75000 | 33000 | 8 |
| Polyphénylquinoxaline | 2,25 | 45 | 13500 | 6000 | 20 |
| Polyéthylènetéréphtalate* | 0,045 | 1,125 | 1312,5 | 29170 | 25 |

*valeurs publiées par W. PUSCH et A. WALCH dans Angew. Chem. Int. Ed. Engl. 21 (1982) 660-685.

Cette constatation par les demandeurs d'une propriété non prévisible des polymères de la famille de présenter lorsqu'ils sont en couche dense, une perméabilité élevée vis-à-vis de la vapeur d'eau les a amenés à envisager l'utilisation de polymères de cette famille pour faire des membranes de perméation gazeuse destinées en particulier à la déshydratation des gaz.

L'utilisation des polymères de la famille des polyquinoxalines en tant que membranes de perméation gazeuse n'est économiquement rentable que si ces membranes présentent une perméabilité élevée vis-à-vis des gaz qu'on veut séparer du mélange gazeux.

Pour préparer des membranes à perméabilité élevée, on peut faire appel à des procédés connus.

Un de ces procédés permet de préparer des membranes de structure asymétrique, caractérisées par le fait que l'une des faces de la membrane contient des pores de faibles dimensions (5 à 100 nm) alors que la face opposée contient des pores de dimensions nettement plus élevées pouvant aller jusqu'à quelques microns. Ce procédé a été utilisé en particulier dans le cas des polymères cellulosiques et est décrit sous le nom de procédé par "inversion de phase" (voir R.F. Kesting, "Synthetic polymeric membranes" page 117, édition Mac Graw Hill, 1971). Il peut être adapté au cas des polyquinoxalines moyennant quelques modifications qui tiennent compte de ce que les polyquinoxalines ne sont pas solubles dans les solvants miscibles à l'eau. La structure des membranes obtenues par ce procédé se caractérise par l'existence d'un gradient de porosité à l'intérieur de la membrane. L'intérêt de ce procédé réside dans le fait qu'il permet d'obtenir, sur une des faces de la membrane, une couche de très faible épaisseur (de 0,05 à plusieurs microns) dont les dimensions de pores sont comprises entre 5 nm et 100 à 200 nm. Cette couche, souvent appelée "peau", repose sur un substrat poreux beaucoup plus épais (plusieurs dizaines de microns) qui joue le rôle de support mécanique de la "peau" tout en étant lui-même très perméable aux gaz.

Dans le cas des polyquinoxalines, ce procédé ne permet pas à lui tout seul d'obtenir côté "peau" une zone dont les diamètres de pores soient inférieurs à 1 nm et qui de ce fait puisse convenir pour la séparation des gaz par le mécanisme de perméation gazeuse. Il est connu que pour certains polymères, lorsqu'on soumet la membrane, préparée par le procédé d'inversion de phase, à un traitement thermique dans l'eau chaude, on peut réduire fortement les dimensions des pores de la "peau". C'est le cas par exemple des membranes en acétate de cellulose qui acquièrent, grâce à un tel traitement, une sélectivité importante vis-à-vis des solutions aqueuses de sels, ce qui les rend aptes à dessaler l'eau de mer et les eaux saumâtres, par la technique de l'osmose inverse. De telles membranes d'osmose inverse présentant déjà la sélectivité recherchée, peuvent être traitées par un procédé thermique de séchage pour être utilisées ensuite comme membranes de perméation gazeuse. Les brevets américains 4 134 742 et 4 130 403 décrivent de telles membranes.

Dans le cas des membranes de polyphénylquinoxaline obtenues par le procédé d'inversion de phase, les dimensions des pores de la "peau" sont trop grandes pour permettre de séparer les gaz efficacement. En outre, cette "peau" présente des défauts de structure (microfissures, pores de dimensions supérieures à quelques dizaines de millièmes de millimètre, etc...) incompatibles avec l'obtention d'une bonne sélectivité vis-à-vis des gaz.

Or, les demandeurs ont constaté que l'on peut réduire les dimensions des pores de la "peau", éliminer partiellement ou totalement ses défauts et augmenter notablement la sélectivité de la membrane en la soumettant à un traitement thermique, dans un liquide inerte (par inerte, on entend non solvant du polymère), vis-à-vis de la membrane entre 60°C et le point d'ébullition du liquide, soit à l'air ou dans une atmosphère de gaz entre 50 et 150°C, soit successivement dans un liquide et dans une atmosphère de gaz.

Un autre procédé permettant de réduire l'influence des défauts de la "peau" consiste à fermer les orifices consécutifs à ces défauts, soit en les remplissant d'un polymère liquide réticulable in situ, soit en les recouvrant d'une mince pellicule d'un polymère solide, comme cela a été décrit dans le brevet des Etats-Unis d'Amérique N° 4 230 463. Il est avantageux d'utiliser à cet effet des polymères de faible masse moléculaire, en particulier des élastomères choisis parmi les résines de silicones, les résines acryliques, styréniques et les élastomères de polybutadiène et d'isoprène, en raison de leur perméabilité élevée aux gaz et de leur élasticité. Ce procédé présente cependant des inconvénients qui le rendent plus limitatif que le traitement thermique. En particulier, il modifie la composition chimique de la "peau". Dans la mesure où les élastomères utilisés à cet effet possèdent une résistance aux agents chimiques et une thermostabilité inférieures à celles du polymère constitutif de la "peau", comme c'est le cas pour la membrane selon l'invention, il en résulte une diminution de la durée de vie de celle-ci.

En outre, ce traitement provoque une forte diminution de la perméabilité de la membrane.

Si la surface qui correspond aux défauts est faible par rapport à la surface de la "peau" exempte de défauts, il n'est pas nécessaire que le polymère utilisé pour éliminer les défauts possède une sélectivité intrinsèque élevée, la sélectivité étant apportée par le polymère qui constitue la "peau". Par contre, si cette surface n'est pas faible par rapport à celle de la "peau", il importe que le polymère qui sert à éliminer les défauts soit lui-même sélectif.

Des membranes de polyphénylquinoxaline de structure asymétrique peuvent être préparées suivant le procédé tel que décrit dans le brevet français N° 2 392 697. A l'aide d'un applicateur, on coule une solution du polymère sur un support plan en verre ou en métal, de manière à obtenir une couche de solution d'épaisseur uniforme. Le support recouvert de la solution est ensuite immergé dans un liquide permettant de coaguler le polymère. Ce liquide doit être non solvant de la polyphénylquinoxaline et présenter une bonne miscibilité avec son solvant, afin qu'un échange puisse s'établir entre le liquide et le solvant du polymère. Cet échange, qui se manifeste par la diffusion du solvant à l'extérieur de la solution et la pénétration du liquide à l'intérieur de celle-ci, a pour conséquence de faire précipiter le polymère. La couche de solution du polymère qui était transparente au moment de son immersion dans le liquide devient opaque et se détache de son support lorsque suffisamment de solvant a diffusé dans le liquide extérieur. Au bout d'un temps plus ou moins long, selon la nature du liquide de coagulation, la couche de polymère devient suffisamment solide pour pouvoir être séparée du liquide de coagulation. Cette couche constitue la membrane présentant la structure décrite plus haut. Son épaisseur dépend de celle de la couche de solution coulée sur le support. Au lieu de couler la solution de polyphénylquinoxaline directement sur une plaque de verre ou de métal, on peut la couler sur un tissu ou un non-tissé préalablement étendu sur la plaque. Dans ce cas, on obtient une membrane adhérant au tissu ou au non-tissé dont le rôle est de fournir un renforcement mécanique à cette membrane.

Le choix du liquide de coagulation dépend de la nature du solvant de la solution de polyphénylquinoxaline. Ainsi, dans le cas du m-crésol, il est intéressant d'utiliser des alcools comme liquide de coagulation, en particulier le méthanol, l'éthanol et le propanol. Si le solvant utilisé est un hydrocarbure chloré tel que le tétrachloroéthane, il est préférable de prendre une cétone, comme par exemple l'acétone, en tant que liquide de coagulation. Un mélange solvant-précipitant peut également être utilisé comme liquide de coagulation. Un tel mélange permet souvent de modifier les dimensions des pores de la membrane. L'addition à la solution de polyphénylquinoxaline d'un agent porophore extractible dans le liquide de coagulation, comme par exemple certains polymères (polyvinylpyrrolidone, polyoxyéthylène, etc...) ou d'un agent tensio-actif, permet d'augmenter le taux de porosité de la membrane.

Conformément à l'invention, la membrane obtenue est ensuite soumise à un traitement adapté pour en éliminer partiellement ou totalement les défauts de surface et diminuer le diamètre des pores de la couche superficielle constituant la "peau" de cette membrane jusqu'à obtenir une peau "dense", de façon à permettre le passage des molécules de gaz à travers la "peau" selon un mécanisme de dissolution et de diffusion obéissant aux lois de Fick. Ce traitement ne diminue pas l'asymétrie de structure existant entre la "peau" et la couche sous-jacente avant l'application du traitement et qui se traduit par un rapport entre le diamètre moyen de pore de la "peau" et celui de la face opposée à la "peau" d'au moins 100. Tout au plus, obtient-on une augmentation de ce rapport, étant donné que la réduction du rayon moyen de pore consécutive au traitement est en général moins importante sur la face opposée à la "peau" que sur la "peau" elle-même.

De façon avantageuse, le traitement auquel on peut avoir recours est un traitement thermique. La durée et la température de ce traitement thermique sont choisies expérimentalement en fonction du taux de séparation des gaz qu'on désire obtenir. Suivant une variante, un tel traitement thermique peut être complété par le dépôt d'un élastomère à la surface de la membrane, suivi d'un traitement thermique additionnel dans la mesure où l'on peut se permettre d'augmenter la sélectivité de la membrane au détriment de sa perméabilité.

Les membranes de structure asymétrique obtenues selon le procédé ci-dessus présentent une perméabilité au méthane, mesurée à 20°C sous 3 bars, de $10^{-5}$ à $10^{-2}$ $m^3/m^2 \cdot sec \cdot MPa$, selon les conditions de préparation utilisées, pour une perméabilité à la vapeur d'eau mesurée à 50°C sous une pression relative de 0,4 à 0,5

supérieure à celle du méthane d'un facteur de 10 à 1000 selon la texture des membranes. La perméabilité de ces membranes au gaz carbonique, mesurée dans les mêmes conditions que celle du méthane, est de 1,2 à 15 fois supérieure à la perméabilité au méthane, le facteur multiplicatif dépendant de la texture de la membrane.

Les membranes de structure asymétrique en polyphénylquinoxaline de l'invention peuvent être utilisées sous forme de membranes planes ou sous forme de fibres creuses. L'avantage de la forme fibre creuse résulte de ce que le rapport surface de membrane sur volume du module contenant la membrane est nettement supérieur à celui de la membrane plane.

Un autre procédé permettant de préparer des membranes de perméabilité élevée peut être utilisé dans le cas où il s'avère impossible de mettre le polymère sélectif sous la forme d'une couche de structure poreuse suffisamment asymétrique. C'est par exemple le cas lorsque le procédé "d'inversion de phase" s'applique mal au polymère sélectif. On prépare alors la couche de structure poreuse asymétrique à partir d'un polymère qui s'y prête mieux et on dépose sur la face qui contient les pores les plus fins une pellicule dense et homogène du polymère sélectif. L'épaisseur de cette pellicule est inférieure à 2 microns et de préférence inférieure à 0,5 micron. On réalise ainsi une membrane composite dont l'intérêt vient de ce qu'elle possède les qualités de chacun des deux polymères utilisés pour sa préparation: l'un apportant à la fois la structure poreuse asymétrique et la tenue mécanique, et l'autre la sélectivité. Bien entendu et conformément à l'invention, de telles membranes composites sont soumises au traitement thermique dans les conditions indiquées ci-dessus.

Les exemples suivants qui ne correspondent pas à une optimisation de la préparation des membranes, sont donnés à titre non limitatif pour illustrer l'utilisation de polyquinoxalines comme matériau de base pour la préparation de membranes destinées à la déshydratation, à la purification et à la séparation des mélanges gazeux.

**Exemple 1**

On utilise une polyphénylquinoxaline ayant la structure chimique suivante:

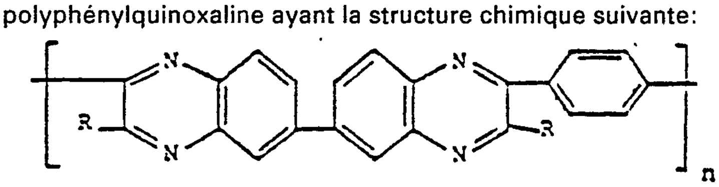

$R = C_6H_5$

$n \geq 10$

A l'aide d'un applicateur réglé à 0,25 mm, on étale une solution à 11 % en poids de polyphénylquinoxaline dans le métacrésol sur une plaque de verre que l'on immerge immédiatement dans un bain d'éthanol à 25°C pendant 24 heures puis dans un bain de diméthylformamide (DMF) pendant 24 heures et finalement dans un bain d'eau distillée pendant 4 heures. Au cours de l'immersion dans l'éthanol, ce dernier pénètre à l'intérieur de la solution de polymère et le métacrésol diffuse partiellement à l'extérieur du polymère dans le bain d'éthanol. Le polymère se solidifie peu à peu et se détache, sous forme d'une membrane opaque, de sa plaque de verre. Le transfert de la membrane dans un bain de DMF permet d'éviter un rétrécissement trop brusque des pores de la membrane.

Après lavage à l'eau, on sèche la membrane dans un courant d'air sec à température ambiante. La perméabilité au méthane de la membrane ainsi obtenue est supérieure à $4.10^{-3}$ $m^3/m^2 \cdot sec \cdot MPa$, mais cette membrane n'est pas sélective, ni pour le $CO_2$, ni pour la vapeur d'eau.

**Exemple 2**

On procède comme dans l'exemple 1, mais après lavage à l'eau, la membrane est soumise à un traitement thermique à l'air à 50°C durant quelques heures. Elle a une épaisseur de 90 µm et possède une structure poreuse asymétrique, constituée par une "peau", d'une épaisseur d'environ 3 µm, supportée par un substrat poreux. Le diamètre moyen des pores de la "peau" est compris entre 0,005 et 0,02 µm. Les pores du substrat poreux ont la forme de doigts de gant orientés perpendiculairement aux deux faces de la membrane et communiquant avec la face opposée à la "peau" par des ouvertures d'un diamètre de 10 à 20 µm.

La perméabilité de cette membrane à différents gaz, exprimée en $cm^3/cm^2 \cdot sec \cdot cm\ Hg$, est indiquée dans le tableau 3 ci-après.

**Tableau 3**

Perméabilité P et facteur de séparation
Membrane asymétrique d'épaisseur 90 µm

P exprimée en $\frac{m^3}{m^2 \cdot sec \cdot MPa}$

Pression de mesure: 3 bars - Température de mesure: 20°C

| P·$10^4$ | | | | | Facteur de séparation | |
|---|---|---|---|---|---|---|
| $O_2$ | $CH_4$ | $CO_2$ | He | $H_2O$* | $H_2O/CH_4$ | $CO_2/CH_4$ |
| 15 | 21 | 8,2 | 38,2 | 262,5 | 12,5 | 0,4 |

* mesurée à 50°C pour une pression relative de 0,44

On constate que la perméabilité au $CH_4$ est supérieure à la perméabilité au $CO_2$, contrairement à ce qui avait été observé sur des films denses (voir tableau 1). Ceci prouve qu'il y a des défauts dans la texture de la "peau" ou que les pores de la "peau" ont des dimensions trop élevees.

**Exemple 3**

On utilise la même solution de polyphénylquinoxaline que dans l'exemple 1, à laquelle on ajoute, pour obtenir une plus grande asymétrie de porosité de la membrane, 40 % d'agent tensioactif (Triton® X100) par rapport au poids de la polyphénylquinoxaline.

On procède comme dans l'exemple 1, mais on modifie les temps d'immersion dans les bains de coagulation qui sont d'une heure dans l'éthanol, 5 heures dans le DMF et 5 jours dans l'eau distillée.

Après lavage à l'eau, on traite la membrane 2 heures à 90°C. Son épaisseur est de 100 µm. L'épaisseur de sa "peau" est de l'ordre de 12 µm. Sa perméabilité à différents gaz est indiquée dans le tableau 4.

**Tableau 4**

Perméabilité P et facteur de séparation de la membrane de l'exemple 3
Membrane d'épaisseur 100 µm et de structure asymétrique

P exprimée en $\frac{m^3}{m^2 \cdot sec \cdot MPa}$

Pression de mesure: 3 bars - Température de mesure: 20°C

| P·$10^5$ | | | | | Facteur de séparation | |
|---|---|---|---|---|---|---|
| $O_2$ | $CH_4$ | $CO_2$ | He | $H_2O$* | $H_2O/CH_4$ | $CO_2/CH_4$ |
| 20,2 | 28,5 | 33 | 66 | 2475 | 87 | 1,15 |

*mesurée à 50°C pour une pression relative de 0,43.

Le traitement thermique plus poussé a donc permis d'améliorer la sélectivité.

**Exemple 4**

On utilise la même solution que dans l'exemple 3 et on l'étale à l'aide d'un applicateur sur une plaque de verre qu'on immerge rapidement dans un bain d'éthanol à 25°C pendant 10 minutes. On immerge ensuite la membrane dans l'eau distillée pendant six jours. Après lavage à l'eau à 80°C, on traite la membrane pendant 4 heures à 90°C. Son épaisseur est de 100 µm. Sa perméabilité à différents gaz est indiquée dans le tableau 5.

On place ensuite un morceau de cette membrane (de surface 20 $cm^2$) sur un support de filtration et on filtre à travers elle 15 $cm^3$ d'une solution à 3,5 % de polydiméthylsiloxane dans l'hexane sous une pression de 4 bars. Le polydiméthylsiloxane est un produit commercial de Dow Corning (Sylgard). On l'utilise en présence de 10 % d'un catalyseur de réticulation.

A la suite de cette filtration, on soumet la membrane à un traitement thermique de 1 heures à 60°C et de 1 heure à 120°C. La perméabilité à différents gaz de la membrane ainsi traitée est indiquée dans le tableau 6.

**Tableau 5**

Perméabilité P et facteur de séparation de la membrane de l'exemple 4.
Membrane d'épaisseur 100 µm, de structure asymétrique

P exprimée en $\frac{m^3}{m^2 \cdot sec \cdot MPa}$

Pression de mesure: 3 bars - Température de mesure: 20°C

| P·10⁵ | | | | | Facteur de séparation | |
|---|---|---|---|---|---|---|
| $O_2$ | $CH_4$ | $CO_2$ | He | $H_2O$* | $H_2O/CH_4$ | $CO_2/CH_4$ |
| 12,7 | 20,2 | 26,2 | 27,7 | 1875 | 92 | 1,3 |

*mesurée à 50°C pour une pression relative de 0,45

**Tableau 6**

Perméabilité P et facteur de séparation de la membrane de l'exemple 4 traitée au polydiméthylsiloxane.
Epaisseur de la membrane: 100 µm

P exprimée en $\frac{m^3}{m^2 \cdot sec \cdot MPa}$

| $P \cdot 10^5$ | | | | | Facteur de séparation | |
|---|---|---|---|---|---|---|
| $O_2$ | $CH_4$ | $CO_2$ | He | $H_2O$* | $H_2O/CH_4$ | $CO_2/CH_4$ |
| 4,3 | 2,25 | 21 | 19,5 | 1748 | 776 | 9,3 |

* mesurée à 50°C pour une pression relative de 0,48

On constate que ce traitement a permis d'éliminer les défauts de la "peau" de la membrane et de multiplier son facteur de séparation $H_2O/CH_4$ par 8 et son facteur de séparation $CO_2/CH_4$ par 7 par rapport à la membrane non traitée.

**Exemple 5**

On prépare une membrane composite à partir d'un support microporeux en polymère acrylique type IRIS® 4038 (Rhône Poulenc). Ce support possède une perméabilité au méthane de 1,1 $m^3/m^2 \cdot sec \cdot MPa$ mesurée sous une différence de pression de 3 bars et ne présente aucune sélectivité méthane/eau.

On met la face brillante de ce support (face dont la porosité est la plus fine) en contact pendant 1 à 2 minutes avec une solution à 2 % en poids de polyphénylquinoxaline dans le 1,1,2,2-tétrachloroéthane et on sèche ensuite le support pendant une dizaine de minutes à la température ambiante, puis on le traite pendant 20 minutes à 60°C à l'air.

La perméabilité de cette membrane à différents gaz est indiquée dans le tableau 7.

**Tableau 7**

Perméabilité P et facteur de séparation d'une membrane composite

P exprimée en $\frac{m^3}{m^2 \cdot sec \cdot MPa}$

Préssion de mesure: 3 bars - Température de mesure: 20°C

| $P \cdot 10^5$ | | | | | Facteur de séparation | |
|---|---|---|---|---|---|---|
| $O_2$ | $CH_4$ | $CO_2$ | He | $H_2O$* | $H_2O/CH_4$ | $CO_2/CH_4$ |
| 4,5 | 6,75 | 4,5 | 9,75 | 188 | 27 | 0,67 |

*mesurée à 50°C pour une pression relative de 0,40.

On utilise un deuxième support microporeux identique au précédent et on met sa face brillante en contact pendant une minute avec une solution à 5 % en poids de polyphénylquinoxaline dans le 1,1,2,2-tétrachloroéthane. On soumet la membrane à un traitement thermique dans les mêmes conditions que plus haut. Sa perméabilité aux gaz est indiquée dans le tableau 8.

**Tableau 8**

Perméabilité P et facteur de séparation d'une membrane composite

P exprimée en $\frac{m^3}{m^2 \cdot sec \cdot MPa}$

Pression de mesure: 3 bars - Température de mesure 20° C

| P·$10^5$ | | | | | Facteur de séparation | |
|---|---|---|---|---|---|---|
| $O_2$ | $CH_4$ | $CO_2$ | He | $H_2O$* | $H_2O/CH_4$ | $CO_2/CH_4$ |
| 0,9 | 1,5 | 1,05 | 1,6 | 60 | 40 | 0,7 |

*mesurée à 50° C pour une pression relative de 0,50.

Des exemples ci-dessus, il ressort que les membranes selon l'invention présentent un intérêt certain pour le fractionnement des mélanges gazeux et notamment pour la déshydratation et la désacidification des gaz, en particulier des hydrocarbures gazeux.

## Revendications

1. Membrane asymétrique de perméation gazeuse obtenue à partir de polymères de la famille des polyquinoxalines présentant le motif:

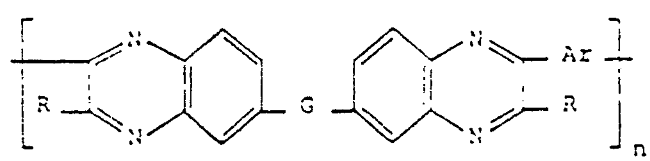

avec $n \geqslant 10$

et
R = H ou radical phényle
G = liaison carbone-carbone ou -O-, -S-, $-SO_2-$, -CO-

Ar =

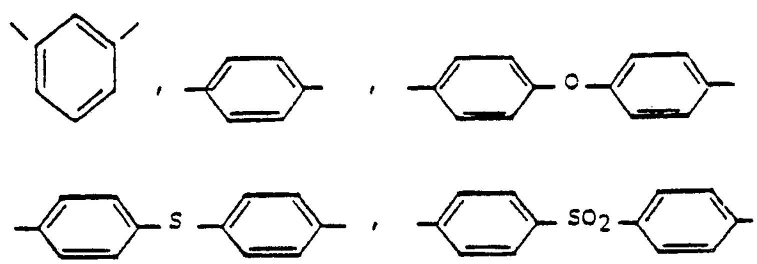

caractérisée par l'existence d'une "peau dense" d'une épaisseur de 0,05 à quelques µm pratiquement sans défaut, pour permettre le passage des molécules de gaz par un mécanisme de dissolution-diffusion.

2. Membrane asymétrique selon la revendication 1, caractérisée par le fait qu'elle résulte du traitement thermique dans un liquide inerte d'une membrane de départ à base d'un polymère tel que défini dans cette revendication à une température comprise entre 50° C et le point d'ébullition dudit liquide et/ou à l'air ou dans un gaz à une température comprise entre 50° C et 150° C pendant une durée allant de quelques minutes à plusieurs heures.

3. Membrane asymétrique selon la revendication 1 ou 2, caractérisée par le fait que la "peau" comporte une très mince couche d'un élastomère de préférence réticulable in situ, choisi parmi les résines de silicones, les résines acryliques, styréniques et les élastomères du butadiène et de l'isoprène, résultant de la mise en contact

de ladite "peau" de la membrane avec la solution de l'élastomère, suivie d'une évaporation du solvant.

4. Membrane asymétrique selon la revendication 3, caractérisée par le fait qu'on la soumet à un traitement thermique tel que défini à la revendication 2.

5. Membrane asymétrique selon l'une des revendications 1 à 4, caractérisée par le fait que le polymère est la polyphénylquinoxaline présentant le motif suivant:

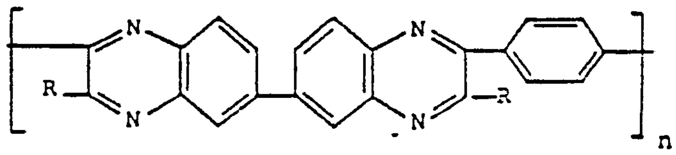

$R = C_6H_5$ $n \geqslant 10$

6. Membrane asymétrique composite, caractérisée par le fait qu'elle est préparée en méttant la face contenant les pores les plus fins d'une membrane microporeuse (membrane d'ultrafiltration) en contact avec une solution renfermant un polymère de la famille des polyquinoxalines tel que défini dans la revendication 1 de manière à obtenir le dépôt d'une mince pellicule en polyquinoxaline d'épaisseur inférieure à 2 μm sur la membrane microporeuse.

7. Membrane asymétrique composite selon la revendication 6, caractérisée par le fait qu'on la soumet à un traitement thermique tel que défini à la revendication 2.

8. Membrane asymétrique composite selon l'une des revendications 6 ou 7, caractérisée par le fait que le polymère est la polyphénylquinoxaline présentant le motif suivant:

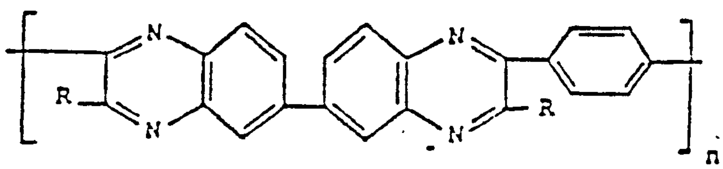

$R = C_6H_5$

$n \geqslant 10$

9. Application d'une membrane selon l'une quelconque des revendications 1 à 8, au fractionnement des mélanges gazeux et notamment à la déshydratation et la désacidification des gaz, en particulier des hydrocarbures gazeux.

**Patentansprüche**

1. Asymmetrische Membran zur Gaspermeation, erhalten von Polymeren der Familie der Polychinoxaline mit der Formel

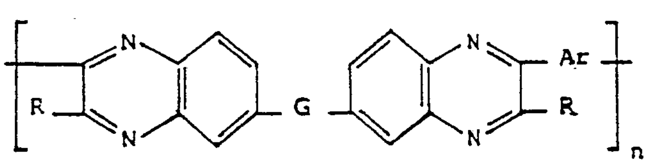 ,

in der $n \geqslant 10$,
R = H oder ein Phenylrest,
G = eine Kohlenstoff-Kohlenstoff-Bindung oder -O-, -S-, $-SO_2-$ oder -CO-, und

Ar = 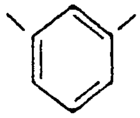 , 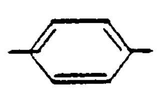 , 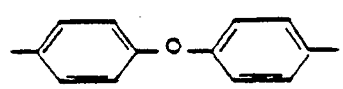

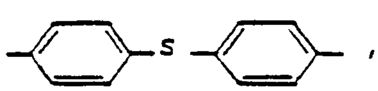 , 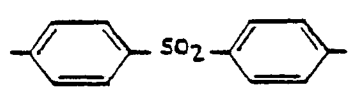

bedeuten,
gekennzeichnet durch das Vorhandensein einer praktisch fehlerlosen "dichten Haut" mit einer Dicke von 0,05

bis zu einigen µm, um den Durchtritt der Gasmoleküle mittels eines Auflösungs-Diffusions-Mechanismusses zu erlauben.

2. Asymmetrische Membran nach Anspruch 1, dadurch gekennzeichnet, daß sie sich aus einer Ausgangsmembran auf der Basis eines wie in diesem Anspruch angegebenen Polymers durch Wärmebehandlung in einer inerten Flüssigkeit bei einer Temperatur zwischen 50°C und dem Siedepunkt der Flüssigkeit und/oder bei Luft oder in einem Gas bei einer Temperatur zwischen 50°C und 150°C während einer Dauer von einigen Minuten bis zu mehreren Stunden ergibt.

3. Asymmetrische Membran nach Anspruch 1 oder 2, dadurch gekennzeichnet, daß die "Haut" eine sehr dünne Schicht eines vorzugsweise an Ort und Stelle vernetzbaren und aus Siliconharzen, Acrylharzen, Styrolharzen und Butadien- und Isopren-Elastomeren ausgewählten Elastomers als Folge des Kontaktes der obigen "Haut" der Membran mit der Elastomer-Lösung und einer nachfolgenden Verdampfung des Lösungsmittels aufweist.

4. Asymmetrische Membran nach Anspruch 3, dadurch gekennzeichnet, daß man sie einer wie in Anspruch 2 angegebenen Wärmebehandlung unterzieht.

5. Asymmetrische Membran nach einem der Ansprüche 1 bis 4, dadurch gekennzeichnet, daß das Polymer das Polyphenylchinoxalin der Formel

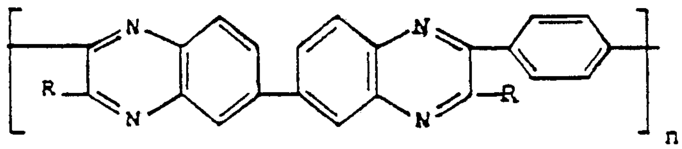

$R = C_6H_5$ $n \geq 10$

ist.

6. Asymmetrische, zusammengesetzte Membran, dadurch gekennzeichnet, daß sie hergestellt wird, indem die die feinsten Poren enthaltende Seite einer mikroporösen Membran (Ultrafiltrations-Membran) mit einer Lösung, die ein wie in Anspruch 1 definiertes Polymer der Familie der Polychinoxaline enthält, dergestalt in Kontakt gebracht wird, daß auf der mikroporösen Membran der Niederschlag eines dünnen Polychinoxalin-Belages einer Dicke geringer als 2 µm erhalten wird.

7. Asymmetrische, zusammengesetzte Membran nach Anspruch 6, dadurch gekennzeichnet, daß man sie einer wie in Anspruch 2 angegebenen Wärmebehandlung unterzieht.

8. Asymmetrische, zusammengesetzte Membran nach einem der Ansprüche 6 oder 7, dadurch gekennzeichnet, daß das Polymer das Polyphenylchinoxalin der Formel

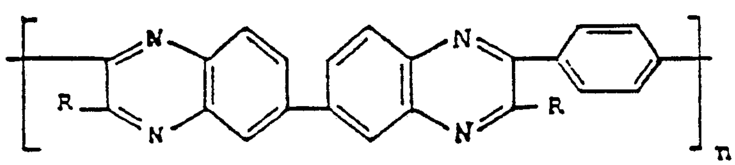

$R = C_6H_5$ $n \geq 10$

ist.

9. Verwendung einer Membran nach einem der Ansprüche 1 bis 8 zur Fraktionierung von Gasgemischen und besonders zur Dehydratisierung und Entsäuerung von Gasen, insbesondere von Kohlenwasserstoffgasen.

## Claims

1. An asymmetric gaseous permeation membrane which is obtained from polymers of the polyquinoxaline family having the structure:

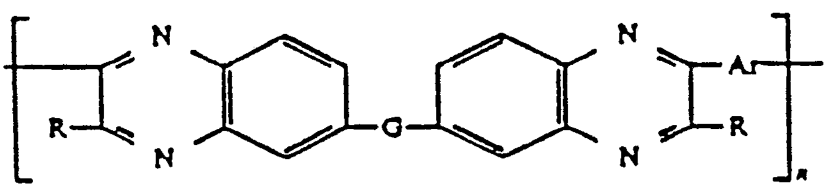

with $n \geqslant 10$
and
R = H or phenyl radical,
G = carbon-carbon bond, or -O-, -S-, $-SO_2-$, -CO-

Ar = 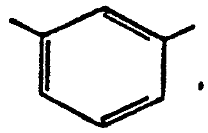, 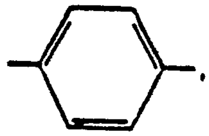,

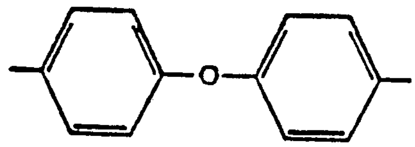

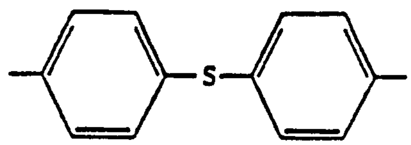,

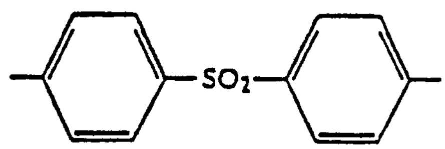

characterised by the presence of a "dense skin" having a thickness of from 0.05 to a few microns substantially without defects in order to allow gas molecules to pass through the membrane by a dissolution-diffusion mechanism.

2. An asymmetric membrane according to claim 1, characterised in that it has been obtained by subjecting a starting membrane formed from a polymer as defined in said claim to a heat treatment in an inert liquid at a temperature ranging from 50°C to the boiling point of said liquid and/or in air, or in a gas at a temperature from 50°C to 150°C, for a period of from a few minutes to several hours.

3. An asymmetric membrane according to claim 1 or 2, characterised in that the skin comprises a very thin layer of an elastomer, preferably curable in situ, selected from the silicone resins, the acrylic resins, the styrenic resins and the butadiene and isoprene elastomers, resulting from contacting said "skin" of the membrane with a solution of said elastomer, followed by evaporation of the solvent.

4. An asymmetric membrane according to claim 3, characterised in that it has been subjected to a heat treatment such as that defined in claim 2.

5. An asymmetric membrane according to any one of claims 1 to 4, characterised in that the polymer is a polyphenylquinoxaline having the structure:

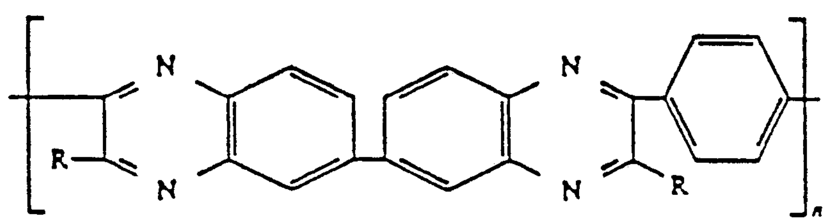

$R = C_6H_5 \qquad n \geq 10$

6. A composite asymmetric membrane characterised in that it is prepared by contacting that face of a microporous membrane (ultrafiltration membrane) which contains the smallest pores with a solution containing a polymer of the polyquinoxaline family as defined in claim 1 in such a manner as to obtain a deposit of a thin film of polyquinoxaline having a thickness of less than 2 µm on the microporous membrane.

7. An asymmetric membrane according to claim 6, characterised in that it has been subjected to a heat treatment such as that defined in claim 2.

8. An asymmetric membrane according to any one of claims 8 and 7, characterised in that the polymer is a polyphenylquinoxaline having the following structure:-

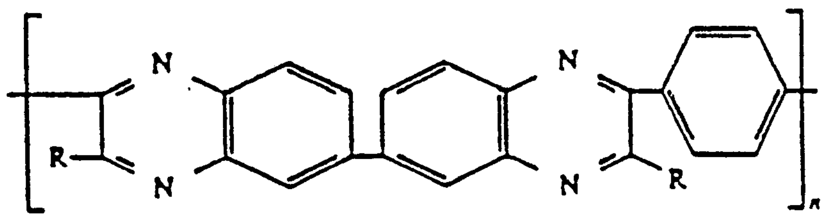

R = $C_6H_5$ n ≥ 10

9. Use of a membrane according to any one of claims 1 to 8, for the fractionation of gas mixtures and in particular for the dehydration and deacidification of gases, in particular gaseous hydrocarbons.